# EUROPÄISCHE PATENTSCHRIFT

(11) **EP 3 074 665 B1**
(45) Veröffentlichungstag und Bekanntmachung des Hinweises auf die Patenterteilung: **30.10.2019**
(21) Anmeldenummer: 14809292.7
(22) Anmeldetag: 25.11.2014
(51) Int. Cl.: F16H 41/24

(54) **ANTRIEBSSTRANGVORRICHTUNG FÜR EIN KRAFTFAHRZEUG**
DRIVE TRAIN DEVICE FOR A MOTOR VEHICLE
DISPOSITIF DE CHAÎNE DE TRANSMISSION POUR VÉHICULE AUTOMOBILE

(30) Priorität: 28.11.2013 DE 102013019876
(43) Veröffentlichungstag der Anmeldung: 05.10.2016
(73) Patentinhaber: Daimler AG, 70327 Stuttgart (DE)
(72) Erfinder: HEUKELBACH, Kai, 73257 Köngen (DE); KOPPITZ, Bernd, 73650 Winterbach (DE); LECHTHALER, Thomas, 63619 Bad Orb (DE); RUBE, Lukas, 70372 Stuttgart (DE); SCHUSTER, Tobias, 73733 Esslingen (DE); ZIEGLER, Bernhard, 73098 Rechberghausen (DE)
(74) Vertreter: JENSEN & SON
(86) Internationale Anmeldenummer: PCT/EP2014/003137
(87) Internationale Veröffentlichungsnummer: WO 2015/078576

(56) Entgegenhaltungen:
- EP-A2- 1 900 468
- DE-A1-102007 059 406
- GB-A- 789 361
- JP-A- 2009 168 116
- US-A- 3 138 107
- US-A- 3 250 222

## Beschreibung

Die Erfindung betrifft eine Antriebsstrangvorrichtung für ein Kraftfahrzeug.

Aus der EP 1 900 468 A2 und auch aus der US 3 138 107 A sind bereits Antriebsstrangvorrichtungen für Kraftfahrzeuge, mit einem Bauteil und einem teilweise in das Bauteil eingegossenen Element, wobei das Bauteil und das eingegossene Element aus unterschiedlichen Materialen bestehen, bekannt.

Aus der gattungsgemäßen , der JP2009168116A ist eine Antriebsstrangvorrichtung für ein Kraftfahrzeug bekannt, mit zumindest einem zur Übertragung eines Drehmoments vorgesehenen Bauteil und zumindest einem teilweise in das Bauteil eingegossenen Element, das zur Übertragung des Drehmoments vorgesehen ist, wobei das Bauteil und das eingegossene Element aus unterschiedlichen Materialen bestehen,
wobei das Bauteil mit zumindest einem weiteren zur Übertragung eines Drehmoments vorgesehenen Bauteil über das eingegossene Element drehmomentübertragend mittelbar verbunden ist, derart, dass das Drehmoment ausschließlich über das eingegossene Element zwischen den Bauteilen übertragen werden kann.

Der Erfindung liegt insbesondere die Aufgabe zugrunde, eine Antriebsstrangvorrichtung in Leichtbauweise wirtschaftlich herzustellen. Diese Aufgabe wird durch eine erfindungsgemäße Ausgestaltung einer Antriebsstrangvorrichtung entsprechend dem Anspruch 1 gelöst. Weiterbildungen der Erfindung ergeben sich aus den abhängigen Ansprüchen.

Die Erfindung geht aus von einer Antriebsstrangvorrichtung für ein Kraftfahrzeug, mit zumindest einem zur Übertragung eines Drehmoments vorgesehenen Bauteil und zumindest einem teilweise in das Bauteil eingegossenen Element, das zur Übertragung des Drehmoments vorgesehen ist, wobei das Bauteil und das eingegossene Element aus unterschiedlichen Materialen bestehen.

Es wird vorgeschlagen, dass die Antriebsstrangvorrichtung eine Dichteinheit aufweist, die dazu vorgesehen ist, eine Verbindungsstelle zwischen dem Bauteil und dem eingegossenen Element abzudichten. Durch das in das Bauteil eingegossene Element kann das Bauteil mit zumindest einem weiteren zur Übertragung eines Drehmoments vorgesehenen Bauteil mittelbar über das eingegossene Element drehmomentübertragend verbunden werden, wodurch das Drehmoment über das eingegossene Element zwischen den Bauteilen übertragen werden kann. Dadurch kann das das eingegossene Element aufweisende Bauteil aus einem ersten Material und das weitere Bauteil aus einem von dem ersten Material unterscheidenden zweiten Material gebildet werden, wodurch eine Herstellung der Antriebsstrangvorrichtung, insbesondere aufgrund einer Wahl einer Verbindungsmethode zur drehmomentübertragenden Verbindung der Bauteile, flexibler gestaltet werden kann. Das Material des eingegossenen Elements kann im Hinblick auf eine Verbindung mit dem weiteren Bauteil an das Material des weiteren Bauteils angepasst werden, wodurch die Verbindung zwischen den Bauteilen besonders zuverlässig, robust und kostengünstig ausgeführt werden kann, ohne dabei Einschränkungen bei einer Wahl des Materials der Bauteile hinnehmen zu müssen. Insbesondere kann eines der Bauteile im Vergleich zu dem anderen Bauteil aus einem besonders leichten Material ausgebildet werden, wodurch die Antriebsstrangvorrichtung in ihrem Gewicht besonders leicht ausgebildet und ein Kraftstoffverbrauch des die Antriebsstrangvorrichtung aufweisenden Kraftfahrzeugs reduziert werden kann.

Da das Bauteil und das in dem Bauteil eingegossene Element aus unterschiedlichen Materialien bestehen, kann insbesondere aufgrund unterschiedlicher Wärmeausdehnungskoeffizienten ein Sitz des eingegossenen Elements in dem Bauteil im Hinblick einer Dichtheit negativ beeinflusst werden, wodurch eine Leckage durch die Verbindungsstelle auftreten kann. Durch die zur Abdichtung der Verbindungsstelle, an der das Bauteil und das eingegossene Element durch einen Guss formschlüssig verbunden sind, vorgesehene Dichteinheit kann eine mögliche Leckage durch die Verbindungsstelle verhindert werden. Es kann eine Dichtheit der Verbindungsstelle und damit der drehmomentübertragenden Verbindung zwischen den Bauteilen sichergestellt werden, wodurch eine Leckage in der Antriebsstrangvorrichtung zuverlässig verhindert werden kann. Die Antriebsstrangvorrichtung kann dadurch besonders wirtschaftlich in Leichtbauweise hergestellt werden, ohne eine Qualität der Antriebsstrangvorrichtung zu reduzieren.

Unter einem "eingegossenen Element" soll insbesondere ein Element verstanden werden, dass durch einen Gießvorgang, insbesondere einen Spritzgussvorgang, des gegossenen Bauteils mit diesem Bauteil formschlüssig verbunden wird. Das eingegossene Element ist vorteilhaft ringförmig ausgebildet, wodurch die Verbindung zwischen dem Bauteil und dem eingegossenen Element zuverlässiger gestaltet werden kann. Unter "teilweise in das Bauteil eingegossen" soll insbesondere verstanden werden, dass das eingegossene Element zumindest einseitig aus dem Material des Bauteils herausragt. Unter einer "Verbindungsstelle" soll insbesondere eine Stelle verstanden werden, an der das Bauteil und das in das Bauteil eingegossene Element aufgrund eines Gießvorgangs des Bauteils formschlüssig miteinander verbunden sind. Vorzugsweise unterscheiden sich das Material des das eingegossene Element aufweisenden Bauteils und das Material des eingegossenen Elements zumindest in einem Wärmeausdehnungskoeffizienten. Unter einer "Dichteinheit" soll insbesondere eine Einheit verstanden werden, die dazu vorgesehen ist, eine Dichtwirkung zur Abdichtung der Verbindungsstelle bereitzustellen, wobei die Dichtwirkung durch zumindest ein Dichtelement, durch eine spezielle Anordnung wenigstens eines Bauteils und/oder Elements der Antriebsstrangvorrichtung, durch eine spezielle Formgebung wenigstens eines Bauteils und/oder Elements der Antriebsstrangvorrichtung, durch ein spezielles Material wenigstens eines Bauteils und/oder Elements der Antriebsstrangvorrichtung und/oder durch einen speziellen Umguß des eingegossenen Elements bereitgestellt werden kann. Unter "vorgesehen" soll insbesondere speziell ausgebildet, ausgelegt, ausgestattet und/oder angeordnet verstanden werden.

Besonders vorteilhaft ist es, wenn das das eingegossene Element aufweisende Bauteil zumindest im Wesentlichen aus einem als Leichtmetall ausgebildeten Material besteht und das eingegossene Element zumindest im Wesentlichen aus einem überwiegend eisenhaltigen Material besteht, wodurch das Gewicht der Antriebsstrangvorrichtung reduziert werden kann. Unter einem "Leichtmetall" soll insbesondere ein Metall und/oder eine Legierung verstanden werden, deren Dichte unter 5g/cm³ liegt, wie insbesondere Aluminium. Unter "im Wesentlichen" soll insbesondere zumindest zu 60%, vorteilhaft zumindest zu 80% und besonders vorteilhaft zumindest zu 90% verstanden werden.

Weiter wird vorgeschlagen, dass die Antriebsstrangvorrichtung zumindest ein weiteres zur Übertragung des Drehmoments vorgesehenes Bauteil aufweist, das gemeinsam mit dem anderen Bauteil zumindest teilweise einen Innenraum einschließt, wobei die Dichteinheit dazu vorgesehen ist, die Verbindungsstelle und den Innenraum gegeneinander abzudichten. Dadurch kann eine Leckage, insbesondere eine Ölleckage, aus dem Innenraum durch die Verbindungsstelle in eine Umgebung verhindert werden.

Das weitere Bauteil besteht vorteilhaft zumindest im Wesentlichen aus einem überwiegend eisenhaltigen Material. Vorzugsweise ist das eingegossene Element als ein Verbindungselement ausgebildet, welches zur Herstellung einer drehmomentübertragenden Verbindung zwischen den Bauteilen mit dem weiteren Bauteil stoffschlüssig verbunden ist. Durch die stoffschlüssige Verbindung kann auf eine aufwendige und kostenintensive Verbindungsmethode, wie insbesondere Schrauben, Nieten und Schweißnieten, verzichtet werden, wodurch Kosten der Antriebsstrangvorrichtung in Leichtbauweise reduziert werden können. Dadurch können zumindest zwei Bauteile der Antriebsstrangvorrichtung, wobei eines der Bauteile aus dem als Leichtmetall ausgebildeten Material besteht, besonders kostengünstig drehmomentübertragend miteinander verbunden werden, wodurch eine Antriebsstrangvorrichtung in Leichtbauweise wirtschaftlich hergestellt werden kann. Vorzugsweise sind das eingegossene Element und das weitere Bauteil miteinander verschweißt und/oder verlötet.

Ferner wird vorgeschlagen, dass die Dichteinheit dazu vorgesehen ist, aufgrund einer zumindest teilelastischen Verformung und/oder aufgrund einer Anhaftung eine Dichtkraft zur Abdichtung der Verbindungsstelle bereitzustellen, wodurch die Verbindungsstelle besonders zuverlässig abgedichtet werden kann. Die Dichteinheit, die dazu vorgesehen ist, aufgrund einer zumindest teilelastischen Verformung eine Dichtkraft zur Abdichtung der Verbindungsstelle bereitzustellen, weist vorzugsweise wenigstens ein zumindest teilelastisches Dichtelement auf, das seine Dichtwirkung insbesondere nach seiner zumindest teilelastischen Verformung bereitstellt. Das zumindest teilelastische Dichtelement ist vorteilhaft als eine Dichtungsscheibe, als ein Dichtring oder dergleichen ausgebildet. Vorzugsweise besteht das zumindest teilelastische Dichtelement wenigstens zum Teil aus Gummi, Kautschuk, Polyethylen, Polytetrafluorethylen oder dergleichen. Grundsätzlich kann das zumindest teilelastische Dichtelement auch zumindest teilweise aus Metall bestehen, wie beispielsweise Kupfer. Weiter ist es grundsätzlich denkbar, dass die Dichteinheit, die dazu vorgesehen ist, aufgrund der zumindest teilelastischen Verformung die Dichtkraft zur Abdichtung der Verbindungsstelle bereitzustellen, einstückig mit einem der Bauteile oder dem eingegossenen Element ausgebildet ist. Die Dichteinheit, die dazu vorgesehen ist, aufgrund einer Anhaftung eine Dichtkraft zur Abdichtung der Verbindungsstelle bereitzustellen, weist vorzugsweise zumindest ein anhaftendes Dichtelement auf, das seine Dichtwirkung insbesondere nach seiner Aushärtung bereitstellt. Das anhaftende Dichtelement ist vorteilhaft als ein Silikonkautschuk, ein Silikonelastomer, ein synthetisches Polymer oder dergleichen ausgebildet. Ferner ist es grundsätzlich denkbar, die Dichteinheit durch gezieltes Gießen des Bauteils wenigstens im Bereich der Verbindungsstelle zu realisieren.

Insbesondere ist es vorteilhaft, wenn die Dichteinheit zumindest ein Dichtelement aufweist, das dichtend zwischen den zwei Bauteilen angeordnet ist, wodurch eine besonders hohe Dichtkraft bereitgestellt werden kann. Unter einem "Dichtelement, das dichtend zwischen den zwei Bauteilen angeordnet ist" soll insbesondere ein Dichtelement verstanden werden, das beide Bauteile dichtend kontaktiert.

Weiter ist es vorteilhaft, wenn die Dichteinheit zumindest ein Dichtelement aufweist, das dichtend zwischen zumindest einem der Bauteile und dem eingegossenen Element angeordnet ist, wodurch eine Montage der zwei Bauteile vereinfacht werden kann. Unter einem "Dichtelement, das dichtend zwischen zumindest einem der Bauteile und dem eingegossenen Element angeordnet ist" soll insbesondere ein Dichtelement verstanden werden, das zumindest eines der Bauteile und das eingegossene Element dichtend kontaktiert.

Ferner ist es vorteilhaft, wenn zumindest eines der Bauteile wenigstens eine Dichtelementaufnahme aufweist, die das zumindest eine Dichtelement wenigstens teilweise aufnimmt, wodurch eine Montage des Dichtelements vereinfacht werden kann.

Um das Dichtelement dichtend zwischen den beiden Bauteilen anzuordnen, greift in einer weiteren erfindungsgemäßen Ausgestaltung zumindest eines der Bauteile zumindest teilweise in die Dichtelementaufnahme ein, wodurch das Dichtelement zur Abdichtung der Verbindungsstelle von dem eingreifenden Bauteil zumindest teilelastisch verformt werden kann.

Des Weiteren wird vorgeschlagen, dass zumindest eines der Bauteile eine Bewegungshemmung für das Dichtelement aufweist, die dazu vorgesehen ist, eine Bewegung des Dichtelements in der Dichtelementaufnahme zumindest zu erschweren, wodurch ein sicherer Sitz des Dichtelements bereitgestellt werden kann. Die Bewegungshemmung ist vorteilhaft als eine Nut ausgebildet, in der das Dichtelement innerhalb der Dichtelementaufnahme angeordnet ist. Vorzugsweise kann die Bewegungshemmung auch durch eine angeraute oder strukturierte Oberfläche in der Dichtelementaufnahme ausgebildet sein. Unter einer "angerauten Oberfläche" soll insbesondere eine Oberfläche verstanden werden, die eine makroskopische Rauheit mit einer mittleren Rauhigkeitshöhe von 0,05 bis 0,2 Millimeter aufweist. Unter einer "strukturierten Oberfläche" soll insbesondere eine Oberfläche verstanden werden, die eine makroskopische Rauheit mit einer mittleren Rauhigkeitshöhe von 0,1 bis 1,5 Millimeter aufweist. Vorzugsweise weist die strukturierte Oberfläche mit bloßem Auge erkennbare Erhöhungen und Vertiefungen auf wie beispielsweise Riefen, Stege, Noppen oder dergleichen.

In einer vorteilhaften Ausgestaltung ist das eingegossene Element dazu vorgesehen, aufgrund seiner Form die Dichteinheit zumindest teilweise auszubilden, wodurch die Verbindungsstelle besonders kompakt und montagefreundlich abgedichtet werden kann. Vorzugsweise weist ein Teil des eingegossenen Elements, der vollständig von dem Material des gegossenen Bauteils umgeben ist, eine Form auf, die zu Ausbildung der Dichteinheit vorgesehen ist, wodurch die Verbindungsstelle von außen unsichtbar abgedichtet werden kann. Vorteilhaft ist der durch das Material des gegossenen Bauteils vollständig umgebene Teil des eingegossenen Elements in der Art geformt, so dass das gegossene Bauteil bei oder durch eine Abkühlung des Materials des gegossenen Bauteils nach dem Gießvorgang auf das eingegossene Element aufgeschrumpft wird. Unter einem "gegossenen Bauteil" soll insbesondere das Bauteil verstanden werden, in das das eingegossene Element teilweise eingegossen ist.

Weiter ist es vorteilhaft, wenn das eingegossene Element zumindest einen durch das Material des gegossenen Bauteils umgebenden Hinterschnitt aufweist, der dazu vorgesehen ist, die Dichteinheit zumindest teilweise auszubilden. Dadurch kann der Teil des eingegossenen Elements, welcher durch das Material des gegossenen Bauteils vollständig umgeben ist, zur Bereitstellung der Dichtwirkung genutzt werden, wodurch auf separate Dichtelemente verzichtet werden kann.

Besonders vorteilhaft ist es, wenn zumindest eines der Bauteile wenigstens teilweise ein Drehmomentwandlergehäuse ausbildet, wodurch ein Drehmomentwandler in Leichtbauweise wirtschaftlich hergestellt werden kann. Durch die stoffschlüssige Verbindung des eingegossenen Elements mit dem weiteren Bauteil kann ferner eine aufwendige Einstellung eines Axialspiels zwischen Bauteilen vermieden werden, wobei insbesondere bei Montage des Drehmomentwandlergehäuses auf Ausgleichselemente, die beispielsweise bei einer Schraubverbindung notwendig sind, verzichtet werden kann. Unter einem "Drehmomentwandlergehäuse" soll insbesondere ein Gehäuse verstanden werden, dass zumindest ein Bauteil des Drehmomentwandlers wenigstens teilweise umgibt und/oder aufnimmt.

Insbesondere ist es vorteilhaft, wenn eines der Bauteile ein Pumpenrad und das andere Bauteil zumindest teilweise einen Außenlamellenträger ausbildet, wodurch ein kostengünstiger Drehmomentwandler mit einer Wandlerüberbrückungskupplung in Leichtbauweise bereitgestellt werden kann.

Ferner wird ein Herstellverfahren zur Herstellung einer Antriebsstrangvorrichtung eines Kraftfahrzeugs, insbesondere einer erfindungsgemäßen Antriebsstrangvorrichtung, vorgeschlagen, bei dem eine Verbindungsstelle zwischen einem zur Übertragung eines Drehmoments vorgesehenen Bauteil, bestehend aus einem ersten Material, und zumindest einem teilweise in das Bauteil eingegossenen und zur Übertragung des Drehmoments vorgesehenen Element, bestehend aus einem von dem ersten Material unterscheidenden zweiten Material, abgedichtet wird, bevor ein weiteres zur Übertragung des Drehmoments vorgesehenes Bauteil drehmomentübertragend mit dem eingegossenen Element verbunden wird.

Weitere Vorteile ergeben sich aus der folgenden Figurenbeschreibung. In den Figuren sind acht Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: teilweise und schematisiert eine Antriebstrangvorrichtung mit einem als Pumpenrad eines Drehmomentwandlers ausgebildeten Bauteil, einem als Außenlamellenträger einer Wandlerüberbrückungskupplung ausgebildeten Bauteil, einem in das als Außenlamellenträger ausgebildete Bauteil eingegossenen Element, das stoffschlüssig mit dem als Pumpenrad ausgebildeten Bauteil verbunden ist, und mit einer Dichteinheit, die eine Versbindungsstelle zwischen dem als Außenlamellenträger ausgebildeten Bauteil und dem eingegossenen Element abdichtet,
- Fig. 2: eine Antriebsstrangvorrichtung mit einer alternativ ausgebildeten Dichteinheit,
- Fig. 3: eine Antriebsstrangvorrichtung mit einer Dichteinheit in einem dritten Ausführungsbeispiel,
- Fig. 4: eine Antriebsstrangvorrichtung mit einer Dichteinheit in einem vierten Ausführungsbeispiel,
- Fig. 5: eine Antriebsstrangvorrichtung mit einer Dichteinheit in einem fünften Ausführungsbeispiel,
- Fig. 6: eine Antriebsstrangvorrichtung mit einer Dichteinheit in einem sechsten Ausführungsbeispiel,
- Fig. 7: eine Antriebsstrangvorrichtung mit einer Dichteinheit in einem siebten Ausführungsbeispiel und
- Fig. 8: eine Antriebsstrangvorrichtung mit einer Dichteinheit in einem achten Ausführungsbeispiel.

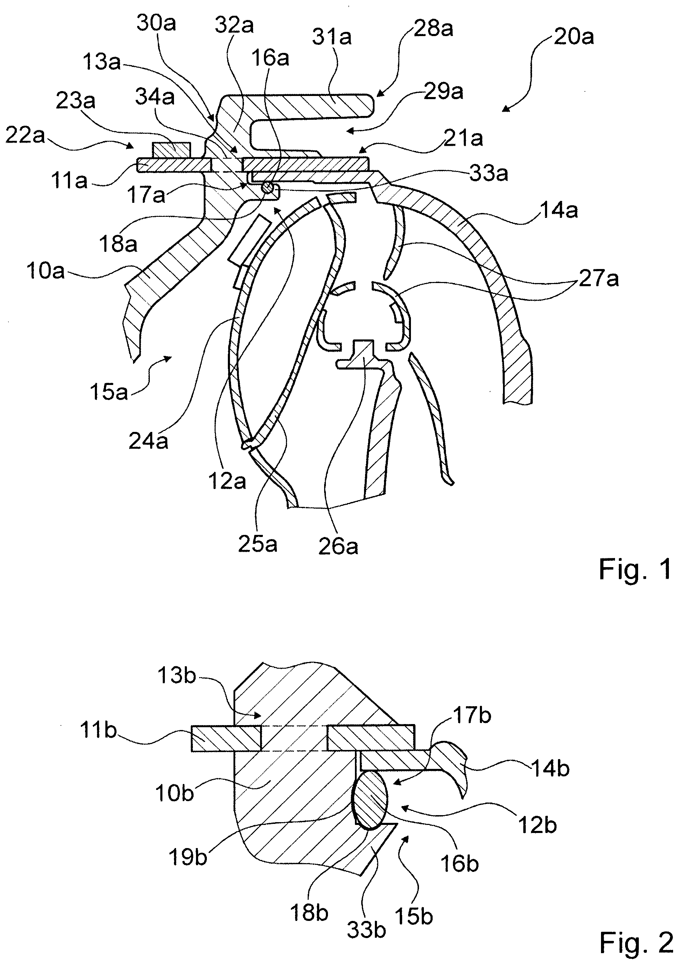

Figur 1 zeigt eine Antriebsstrangvorrichtung für ein nicht näher dargestelltes Kraftfahrzeug, die für einen Antriebsstrang des Kraftfahrzeugs vorgesehen ist. Die Antriebsstrangvorrichtung weist ein nicht näher dargestelltes Automatikgetriebe und einen hydraulischen Drehmomentwandler 20a mit einer Wandlerüberbrückungskupplung auf. Der Drehmomentwandler 20a weist dabei ein Pumpenrad, ein Turbinenrad und ein Leitrad auf. Die Wandlerüberbrückungskupplung weist einen Außenlamellenträger, der drehfest mit dem Pumpenrad verbunden ist, und einen Innenlamellenträger, der drehfest mit dem Turbinenrad verbunden ist, auf.

Die Antriebsstrangvorrichtung weist weiter ein erstes zur Übertragung eines Drehmoments vorgesehenes Bauteil 10a und ein zweites zur Übertragung eines Drehmoments vorgesehenes Bauteil 14a auf, die drehmomentübertragend miteinander verbunden sind. Zur Aufnahme des ersten Bauteils 10a und des zweiten Bauteils 14a weist die Antriebsstrangvorrichtung ein nicht näher dargestelltes Gehäuse auf, innerhalb dessen das erste Bauteil 10a und das zweite Bauteil 14a angeordnet sind. Das erste Bauteil 10a und das zweite Bauteil 14a sind dabei relativ zu dem nicht dargestellten Gehäuse drehbar gelagert.

Das erste Bauteil 10a und das zweite Bauteil 14a bestehen aus unterschiedlichen Materialien. Das erste Bauteil 10a besteht aus einem anderen Material als das zweite Bauteil 14a. Um eine Leichtbauweise zu realisieren, besteht das erste Bauteil 10a aus einem als Leichtmetall ausgebildeten Material. Das erste Bauteil 10a besteht aus Aluminium. Dabei ist das erste Bauteil 10a als ein Gussteil ausgebildet. Das erste Bauteil 10a ist somit gegossen. Das zweite Bauteil 14a besteht aus einem überwiegend eisenhaltigen Material. Das zweite Bauteil 14a besteht aus Stahl.

Um das erste Bauteil 10a und das zweite Bauteil 14a drehmomentübertragend miteinander zu verbinden, weist die Antriebsstrangvorrichtung ein Element 11a auf, das das Drehmoment zwischen dem ersten Bauteil 10a und dem zweiten Bauteil 14a überträgt. Das Element 11a ist teilweise in das erste Bauteil 10a eingegossen. Dabei besteht das eingegossene Element 11a aus einem anderen Material als das erste Bauteil 10a. Das eingegossene Element 11a besteht aus einem überwiegend eisenhaltigen Material. Es besteht aus Stahl. Durch das Eingießen wird an einer Verbindungsstelle 13a eine formschlüssige Verbindung zwischen dem aus Aluminium bestehenden ersten Bauteil 10a und dem aus Stahl bestehenden Element 11a bereitgestellt. Das eingegossene Element 11a ist als ein Verbindungselement ausgebildet, das die drehmomentübertragende Verbindung zwischen dem ersten Bauteil 10a und dem zweiten Bauteil 14a herstellt. Dazu sind das in das erste Bauteil 10a eingegossene Element 11a und das zweite Bauteil 14a stoffschlüssig miteinander verbunden. Das eingegossene Element 11a und das zweite Bauteil 14a weisen somit eine stoffschlüssige Verbindungsstelle 13a auf. In diesem Ausführungsbeispiel sind das aus Stahl bestehende zweite Bauteil 14a und das aus Stahl bestehende eingegossene Element 11a miteinander verschweißt. Sie sind durch eine Schweißverbindung miteinander verbunden. Das aus Stahl bestehende zweite Bauteil 14a und das aus Aluminium bestehende erste Bauteil 10a sind über das in dem ersten Bauteil 10a eingegossene Element 11a drehmomentübertragend miteinander verbunden. Die stoffschlüssige Verbindungsstelle 13a ist als eine Schweißstelle ausgebildet. Das erste Bauteil 10a und das zweite Bauteil 14a sind mittels einer Stahl-Stahl-Fügung miteinander verbunden. Grundsätzlich können das zweite Bauteil 14a und das eingegossene Element 11a alternativ oder zusätzlich miteinander verlötet und/oder verklebt sein. Um Kosten einzusparen kann das eingegossene Element 11a grundsätzlich aus Blechstreifen wie ein Puzzle verbaut werden.

Das eingegossene Element 11a ragt axial beidseitig aus dem Material des ersten Bauteils 10a heraus. Das eingegossene Element 11a weist eine erste axial aus dem Material des ersten Bauteils 10a herausragende Seite 21a und eine zweite axial aus dem Material des ersten Bauteils 10a herausragende Seite 22a auf. Die erste axial herausragende Seite 21a des eingegossenen Elements 11a ist zur stoffschlüssigen Anbindung an das zweite Bauteil 14a vorgesehen. Mit der ersten axial herausragenden Seite 21a ist das eingegossene Element 11a mit dem zweiten Bauteil 14a stoffschlüssig verbunden. Die axial gegenüberliegende zweite axial herausragende Seite 22a des eingegossenen Elements 11a ist zur Auswuchtung vorgesehen. Die zweite axial herausragende Seite 22a weist zur Auswuchtung ein Wuchtelement 23a auf. Das Wuchtelement 23a ist zur Beseitigung einer Unwucht auf der zweiten axial herausragenden Seite 22a fest auf dem eingegossenen Element 11a angeordnet. Das Wuchtelement 23a ist als ein Wuchtblech ausgebildet. Grundsätzlich kann die zweite axial herausragende Seite 22a zur Auswuchtung zusätzlich oder alternativ wenigstens eine Wuchtausnehmung aufweisen, die als eine Materialwegnahme ausgebildet ist. Weiter ist es grundsätzlich denkbar, dass ein positives Wuchten durch ein CMT-Schweißen auf der zweiten axial herausragenden Seite 22a durchgeführt wird.

Um eine Gussverbindung zwischen dem ersten Bauteil 10a und dem eingegossenen Element 11a zuverlässiger zu gestalten, weist das eingegossene Element 11a mehrere Materialfehlstellen 34a auf, die in einem eingegossenen Zustand von dem Material des ersten Bauteils 10a ausgefüllt sind. Die Materialfehlstellen 34a sind dabei axial zwischen den axial herausragenden Seiten 21a, 22a angeordnet. Die Materialfehlstellen 34a sind gleichmäßig um einen Umfang des eingegossenen Elements 11a angeordnet. Sie sind als Bohrungen ausgebildet. Das erste Bauteil 10a und das eingegossene Element 11a sind in einem Schnitt durch eine solche Materialfehlstelle 34a dargestellt. Das eingegossene Element 11a ist ringförmig ausgebildet. Es ist als ein Verbindungsring ausgebildet.

Das erste Bauteil 10a und das zweite Bauteil 14a schließen einen Innenraum 15a ein, der zumindest in einem Betrieb mit einem flüssigen Betriebsmittel gefüllt ist. Das erste Bauteil 10a und das zweite Bauteil 14a bildet ein Drehmomentwandlergehäuse des Drehmomentwandlers 20a aus. In dem Innenraum 15a und damit innerhalb des ersten Bauteils 10a und des zweiten Bauteils 14a sind Bauteile 24a, 25a, 26a, 27a des Drehmomentwandlers 20a angeordnet. Das erste Bauteil 10a bildet einstückig den Außenlamellenträger der Wandlerüberbrückungskupplung und das zweite Bauteil 14a einstückig das Pumpenrad des Drehmomentwandlers 20a aus. Das Betriebsmittel mit dem der Innenraum 15a zumindest in dem Betrieb gefüllt ist, ist als Öl ausgebildet.

Das innerhalb der Bauteile 10a, 14a angeordnete Bauteil 24a ist als das Turbinenrad, die innerhalb der Bauteile 10a, 14a angeordneten Bauteile 25a sind jeweils als eine Turbinenradschaufel, das innerhalb der Bauteile 10a, 14a angeordnete Bauteil 26a ist als das Leitrad und die innerhalb der Bauteile 10a, 14a angeordneten Bauteile 27a sind jeweils als eine Pumpenradschaufel des Drehmomentwandlers 20a ausgebildet. Somit ist der Außenlamellenträger aus Aluminium hergestellt und durch das eingegossene Element 11a mit dem aus Stahl ausgebildeten Pumpenrad des Drehmomentwandlers 20a verbunden, wobei dazu das Pumpenrad und das eingegossene Element 11a miteinander verschweißt sind. Grundsätzlich kann das erste Bauteil 10a mit dem Außenlamellenträger der Wandlerüberbrückungskupplung und das zweite Bauteil 14a mit dem Pumpenrad des Drehmomentwandlers 20a lediglich fest verbunden sein.

Die Antriebsstrangvorrichtung weist weiter eine Schöpfvorrichtung 28a auf, die bei einer Rotation aufgrund einer Adhäsion ein Kühlmittel aus einem Kühlmittelsumpf mitnimmt und damit schöpft. Die Schöpfvorrichtung 28a befördert dabei das Kühlmittel auf ein höheres Niveau, von dem es aufgrund einer Schwerkraft am ersten Bauteil 10a und am zweiten Bauteil 14a wieder abfließt. Das erste Bauteil 10a bildet einstückig die Schöpfvorrichtung 28a aus. Die Schöpfvorrichtung 28a ist bezüglich einer Rotationsachse des ersten Bauteils 10a und des zweiten Bauteils 14a radial außerhalb des eingegossenen Elements 11a angeordnet. Die Schöpfvorrichtung 28a umgibt die erste axial herausragende Seite 21a des eingegossenen Elements 11a. Das Kühlmittel ist dabei als ein Öl ausgebildet.

Die Schöpfvorrichtung 28a weist eine erste stirnseitige Materialfehlstelle 29a und eine gegenüberliegende zweite stirnseitige Materialfehlstelle 30a auf. Die Materialfehlstellen 29a, 30a bilden Rinnen aus, die in axialer Richtung geöffnet sind. Sie verlaufen dabei jeweils stirnseitig um den Umfang der Schöpfvorrichtung 28a. Die erste Materialfehlstelle 29a ist bezüglich der Rotationsachse radial über der ersten axial herausragenden Seite 21a des eingegossenen Elements 11a angeordnet. Die Materialfehlstellen 29a, 30a weisen unterschiedliche Ausmaße auf. Die erste Materialfehlstelle 29a ist dabei größer ausgebildet als die zweite Materialfehlstelle 30a. Die erste Materialfehlstelle 29a ist axial tiefer als die zweite Materialfehlstelle 30a. Die Materialfehlstellen 29a, 30a sind jeweils durch das Gießen des ersten Bauteils 10a ausgeformt. Sie sind jeweils ringförmig.

Aufgrund der axial gegenüberliegenden Materialfehlstellen 29a, 30a weist die Schöpfvorrichtung 28a einen Schöpfring 31a und eine Materialeinschnürung 32a auf. Die Materialeinschnürung 32a verbindet das erste Bauteil 10a und den Schöpfring 31a einstückig miteinander. Der Schöpfring 31a ist dabei radial über der Materialeinschnürung 32a angeordnet. Der Schöpfring 31a und die Materialeinschnürung 32a verlaufen um einen Umfang des ersten Bauteils 10a. Ausgehend von der Materialeinschnürung 32a weist der Schöpfring 31a unterschiedliche Axialerstreckungen auf. Eine axiale Erstreckung des Schöpfrings 31a ausgehend von der Materialeinschnürung 32a in Richtung der ersten axial herausragenden Seite 21a des eingegossenen Elements 11a ist dabei größer als eine axiale Erstreckung des Schöpfrings 31a ausgehend von der Materialeinschnürung 32a in Richtung der zweiten axial herausragenden Seite 22a des eingegossenen Elements 11a. Der Schöpfring 31a erstreckt sich ausgehend von der Materialeinschnürung 32a axial im Wesentlichen in Richtung der ersten axial herausragenden Seite 21a des eingegossenen Elements 11a. Der Schöpfring 31a überdacht die erste axial herausragende Seite 21a des eingegossenen Elements 11a. Der Schöpfring 31a überdacht damit die stoffschlüssige Verbindungsstelle 13a zwischen dem zweiten Bauteil 14a und dem eingegossenen Element 11a. Eine Überdachung der zweiten axial herausragenden Seite 22a des eingegossenen Elements 11a durch den Schöpfring 31a fehlt. Es fehlt damit eine Überdachung des Wuchtelements 23a durch den Schöpfring 31a. In einem Schnitt entlang der Rotationsachse entsprechend der Figur 1 weist die Schöpfvorrichtung 28a eine Ambossform auf. Dabei erstreckt sich der radial über der Materialeinschnürung 32a angeordnete Schöpfring 31a axial im Wesentlichen in Richtung der ersten axial herausragenden Seite 21a des eingegossenen Elements 11a.

Um sicherzustellen, dass die Verbindungsstelle 13a zwischen dem ersten Bauteil 10a und dem eingegossenen Element 11a flüssigkeitsdicht ist, weist die Antriebsstrangvorrichtung eine Dichteinheit 12a auf, die die Verbindungsstelle 13a zwischen dem ersten Bauteil 10a und dem eingegossenen Element 11a flüssigkeitsdicht abdichtet. Die Dichteinheit 12a dichtet die Verbindungsstelle 13a und den Innenraum 15a gegeneinander ab und verhindert dadurch, dass das Betriebsmittel aus dem Innenraum 15a ungewollt durch die Verbindungsstelle 13a aus dem Innenraum 15a austritt.

Die Dichteinheit 12a ist dazu vorgesehen, aufgrund einer elastischen Verformung eine Dichtkraft zur Abdichtung der Verbindungsstelle 13a bereitzustellen. Die Dichteinheit 12a weist ein elastisch verformbares Dichtelement 16a auf, dass die Verbindungsstelle 13a zwischen dem ersten Bauteil 10a und dem eingegossenen Element 11a flüssigkeitsdicht abdichtet. Das Dichtelement 16a stellt eine Dichtfunktion erst nach seiner elastischen Verformung bereit. Grundsätzlich kann die Dichteinheit 12a einstückig durch das erste Bauteil 10a und/oder durch das zweite Bauteil 14a gebildet sein, beispielsweise durch eine Materialerhebung oder dergleichen.

Das Dichtelement 16a ist innerhalb des ersten Bauteils 10a angeordnet. Das erste Bauteil 10a umgibt das Dichtelement 16a. Das Dichtelement 16a läuft um die Rotationsachse der Bauteile 10a, 14a herum. Es ist endlos ausgebildet. Das Dichtelement 16a ist separat zu den Bauteilen 10a, 14a ausgebildet. Das Dichtelement 16a ist als ein Dichtring ausgebildet. Das Dichtelement 16a ist aus Gummi gebildet. Grundsätzlich kann das Dichtelement 16a auch aus einem anderen Material, welches durch zumindest ein teilelastisches Verhalten eine Dichtwirkung bereitstellt, gebildet sein, wie beispielsweise aus Kupfer. Weiter ist es grundsätzlich denkbar, dass die Dichteinheit 12a mehrere Dichtelemente aufweist. Das Dichtelement 16a weist einen runden Querschnitt auf. Grundsätzlich kann der Querschnitt auch elliptisch, eckig oder dergleichen sein. Ferner ist es denkbar, dass das Dichtelement 16a verwunden, verdrillt, kurvig oder dergleichen um die Rotationsachse verläuft.

Das Dichtelement 16a ist dichtend zwischen dem ersten Bauteil 10a und dem zweiten Bauteil 14a angeordnet. Es kontaktiert direkt das erste Bauteil 10 und direkt das zweite Bauteil 14a. Das Dichtelement 16a ist zwischen dem ersten Bauteil 10a und dem zweiten Bauteil 14a eingeklemmt. Das Dichtelement 16a ist innerhalb des zweiten Bauteils 14a angeordnet. Das zweite Bauteil 10a umgibt das Dichtelement 16a.

Zur Anordnung des Dichtelements 16a weist das erste Bauteil 10a eine Dichtelementaufnahme 17a auf, die das Dichtelement 16a aufnimmt. Die Dichtelementaufnahme 17a ist als eine Materialfehlstelle ausgebildet. Die Dichtelementaufnahme 17a ist in Richtung des zweiten Bauteils 14a geöffnet. Sie ist ringförmig ausgebildet. Die Dichtelementaufnahme 17a ist in Form einer Rinne ausgebildet, die in axialer Richtung geöffnet ist. Die Dichtelementaufnahme 17a ist bezüglich der Rotationsachse der Bauteile 10a, 14a radial innerhalb des eingegossenen Elements 11a angeordnet. Die Dichtelementaufnahme 17a ist in eine dem zweiten Bauteil 14a abgewandte Richtung axial und in eine der Rotationsachse zugewandte Richtung radial durch das erste Bauteil 10a begrenzt. In eine der Rotationsachse abgewandte Richtung ist die Dichtelementaufnahme 17a radial durch das eingegossene Element 11a begrenzt. Grundsätzlich kann die Dichtelementaufnahme 17a in Form einer Rille, einer Kerbe, einer Tasche oder dergleichen ausgebildet sein.

Zur Ausbildung der Dichtelementaufnahme 17a weist das erste Bauteil 10a einen Vorsprung 33a auf. Der Vorsprung 33a ist radial unterhalb des eingegossenen Elements 11a angeordnet. Er erstreckt sich ausgehend von einer dem zweiten Bauteil 14a zugewandten Oberfläche des ersten Bauteils 10a axial in Richtung des zweiten Bauteils 14a. Das Dichtelement 16a stützt sich an dem Vorsprung 33a ab. Es ist auf dem Vorsprung 33a angeordnet. Die Dichtelementaufnahme 17a ist durch das Gießen des ersten Bauteils 10a gebildet.

Zur positionssicheren Anordnung des Dichtelements 16a weist das erste Bauteil 10a eine Bewegungshemmung 18a für das Dichtelement 16a auf, die eine axiale Bewegung des Dichtelements 16a in der Dichtelementaufnahme 17a erschwert. Die Bewegungshemmung 18a positioniert das Dichtelement 16a in der Dichtelementaufnahme 17a. Sie positioniert das Dichtelement 16a auf dem Vorsprung 33a. Die Bewegungshemmung 18a ist als eine Vertiefung in der Dichtelementaufnahme 17a ausgebildet, die dazu vorgesehen ist, das Dichtelement 16a aufzunehmen. Die Bewegungshemmung 18a ist in den Vorsprung 33a eingebracht. Sie ist radial in Richtung des eingegossenen Elements 11a geöffnet. Die Bewegungshemmung 18a fixiert axial das Dichtelement 16a auf dem Vorsprung 33a. Eine Form der Bewegungshemmung 18a ist an eine Form des Dichtelements 16a angepasst. Die Bewegungshemmung 18a ist als eine Nut ausgebildet. Grundsätzlich kann die Bewegungshemmung 18a auch als eine angeraute oder strukturierte Oberfläche ausgebildet sein.

Zur Bereitstellung der Dichtkraft greift das zweite Bauteil 14a in die Dichtelementaufnahme 17a ein. Das in die Dichtelementaufnahme 17a eingreifende zweite Bauteil 14a verformt das Dichtelement 16a. Das zweite Bauteil 14a drückt das Dichtelement 16a radial gegen das erste Bauteil 10a. Es drückt das Dichtelement 16a radial gegen den Vorsprung 33a. Das zweite Bauteil 14a ist teilweise radial zwischen dem eingegossenen Element 11a und dem Vorsprung 33a angeordnet. Das zweite Bauteil 14a ist in die Dichtelementaufnahme 17a eingesteckt. Alternativ oder zusätzlich kann das zweite Bauteil 14a eine Bewegungshemmung aufweisen, die die Bewegung des Dichtelements 16a in der Dichtelementaufnahme 17a erschwert.

In einem Herstellverfahren zur Herstellung der Antriebsstrangvorrichtung wird das aus dem eisenhaltigen Material bestehende, als Verbindungselement ausgebildete Element 11a in das aus dem als Leichtmetall ausgebildeten Material bestehende erste Bauteil 10a eingegossen, um eine formschlüssige Verbindung zwischen dem ersten Bauteil 10a und dem eingegossenen Element 11a herzustellen. Zur Anbindung an das zweite Bauteil 14a und zur Auswuchtung wird das eingegossene Element 11a in der Art eingegossen, dass dieses axial beidseitig aus dem Material des ersten Bauteils 10a herausragt.

Die Verbindungsstelle 13a zwischen dem ersten Bauteil 10a und dem eingegossenen Element 11a wird anschließend abgedichtet, bevor das zweite Bauteil 14a drehmomentübertragend mit dem eingegossenen Element 11a verbunden wird. Dazu wird das Dichtelement 16a auf den Vorsprung 33a gedrückt, bis dieses durch die Bewegungshemmung 18a aufgenommen ist.

Daraufhin werden die inneren Bauteile 24a, 25a, 26a, 27a in einer Vormontage in dem ersten Bauteil 10a und dem zweiten Bauteil 14a vormontiert, bevor das zweite Bauteil 14a und das eingegossene Element 11a stoffschlüssig miteinander verbunden werden. Nach der Vormontage der inneren Bauteile 24a, 25a, 26a, 27a wird ein richtiges Axialspiel zwischen dem ersten Bauteil 10a und dem zweiten Bauteil 14a eingestellt. Anschließend wird das zweite Bauteil 14a in die Dichtelementaufnahme 17a gesteckt, wodurch das Dichtelement 16a durch das zweite Bauteil 14a verformt wird. Durch die Verformung des Dichtelements 16a mittels dem zweiten Bauteil 14a wird die Verbindungsstelle 13a zwischen dem ersten Bauteil 10a und dem eingegossenen Element 11a abgedichtet. Daraufhin werden das erste Bauteil 10a und das zweite Bauteil 14a drehmomentübertragend miteinander verbunden. Um das aus dem als Leichtmetall ausgebildeten Material bestehende erste Bauteil 10a und das aus dem eisenhaltigen Material bestehende zweite Bauteil 14a drehmomentübertragend miteinander zu verbinden, wird die erste axial herausragende Seite 21a des in das erste Bauteil 10a eingegossenen Elements 11a mit dem zweiten Bauteil 14a stoffschlüssig verbunden. Dabei wird das eingegossene Element 11a und das zweite Bauteil 14a miteinander verschweißt. Die drehmomentübertragende Verbindung des ersten Bauteils 10a mit dem zweiten Bauteil 14a erfolgt unter Verzicht von Spielausgleichselementen.

Damit wird zuerst das Dichtelement 16a in der Dichtelementaufnahme 17a angebracht, die innerhalb des ersten Bauteils 10a und des zweiten Bauteils 14a angeordneten Bauteile 24a, 25a, 26a, 27a axial mit einem richtigen Spiel zueinander eingestellt, das zweite Bauteil 14a zur Abdichtung der Verbindungsstelle 13a in die Dichtelementaufnahme 17a eingesteckt und erst dann das zweite Bauteil 14a und das eingegossene Element 11a miteinander verschweißt. Es werden keine Spielausgleichselemente, wie Einstellscheiben, benötigt.

In den Figuren 2 bis 8 sind sieben weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figur 1, verwiesen werden kann. Zur Unterscheidung der Ausführungsbeispiele wurde der Buchstabe a in den Bezugszeichen des Ausführungsbeispiels in der Figur 1 durch die Buchstaben b bis h in den Bezugszeichen der Ausführungsbeispiele der Figuren 2 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele insbesondere der Figur 1 verwiesen werden.

In der Figur 2 ist schematisch ein Ausschnitt einer Antriebsstrangvorrichtung für ein Kraftfahrzeug in einem zweiten Ausführungsbeispiel dargestellt. Die Antriebsstrangvorrichtung weist ein erstes Bauteil 10b, ein teilweise in das erste Bauteil 10b eingegossenes Element 11b und ein zweites Bauteil 14b, das stoffschlüssig mit dem eingegossenen Element 11b verbunden ist, auf. Zur Abdichtung einer Verbindungsstelle 13b zwischen dem ersten Bauteil 10b und dem eingegossenen Element 11b weist die Antriebsstrangvorrichtung eine Dichteinheit 12b mit einem Dichtelement 16b auf, die die Verbindungsstelle 13b gegenüber einem durch das erste Bauteil 10b und das zweite Bauteil 14b eingeschlossenen Innenraum 15b abdichtet. Zur Anordnung des Dichtelements 16b weist das erste Bauteil 10b eine Dichtelementaufnahme 17b auf, die das Dichtelement 16b aufnimmt. Zur Ausbildung der Dichtelementaufnahme 17b weist das erste Bauteil 10b einen Vorsprung 33b auf.

Im Unterschied zu dem vorherigen Ausführungsbeispiel weist das erste Bauteil 10b zur positionssicheren Anordnung des Dichtelements 16b zwei Bewegungshemmungen 18b, 19b auf, die eine Bewegung des Dichtelements 16b in der Dichtelementaufnahme 17b in zwei verschiedene Richtungen erschweren. Die erste Bewegungshemmung 18b ist dazu vorgesehen eine axiale Bewegung des Dichtelements 16b in der Dichtelementaufnahme 17b und damit auf Vorsprung 33b zu erschweren. Die zweite Bewegungshemmung 19b ist dazu vorgesehen eine radiale Bewegung des Dichtelements 16b in der Dichtelementaufnahme 17b und damit insbesondere auf Vorsprung 33b zu erschweren. Beide Bewegungshemmungen 18b, 19b sind als eine Vertiefung ausgebildet, die dazu vorgesehen ist, das Dichtelement 16b aufzunehmen. Die erste Bewegungshemmung 18b ist in den Vorsprung 33b eingebracht. Die erste Bewegungshemmung 18b ist radial in Richtung des eingegossenen Elements 11b geöffnet. Die zweite Bewegungshemmung 19b ist in einem die Dichtelementaufnahme 17b axial begrenzenden Material des ersten Bauteils 10a eingebracht. Die zweite Bewegungshemmung 19b ist axial in Richtung des zweiten Bauteils 14b geöffnet. Die Bewegungshemmungen 18b, 19b fixieren das Dichtelement 16b radial und axial auf dem Vorsprung 33b.

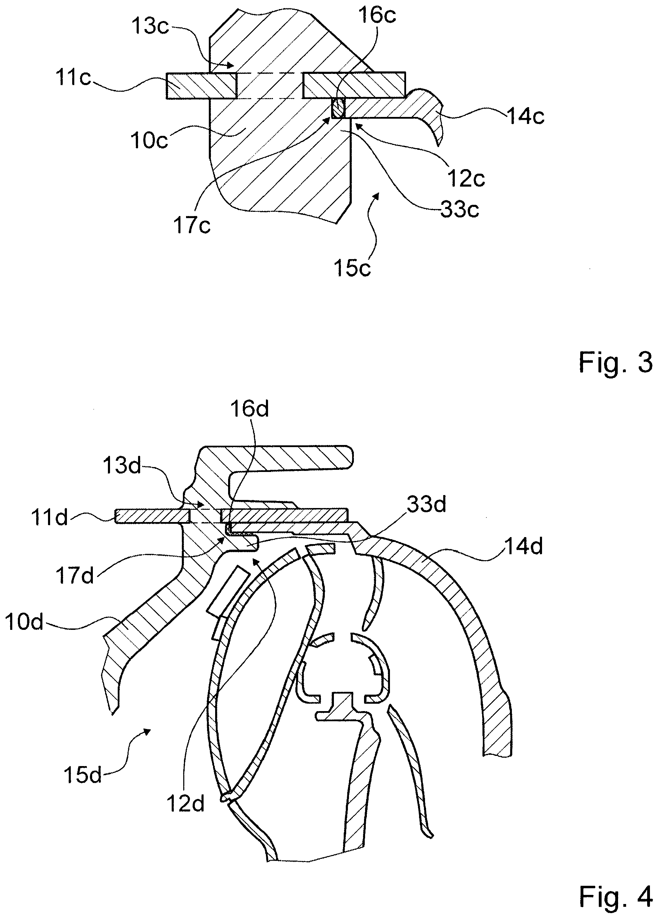

In der Figur 3 ist schematisch eine Antriebsstrangvorrichtung für ein Kraftfahrzeug in einem dritten Ausführungsbeispiel dargestellt. Die Antriebsstrangvorrichtung weist ein erstes Bauteil 10c, ein teilweise in das erste Bauteil 10c eingegossenes Element 11c und ein zweites Bauteil 14c, das stoffschlüssig mit dem eingegossenen Element 11c verbunden ist, auf. Zur Abdichtung einer Verbindungsstelle 13c zwischen dem ersten Bauteil 10c und dem eingegossenen Element 11c weist die Antriebsstrangvorrichtung eine Dichteinheit 12c mit einem Dichtelement 16c auf, die die Verbindungsstelle 13c gegenüber einem durch das erste Bauteil 10c und das zweite Bauteil 14c eingeschlossenen Innenraum 15c abdichtet. Zur Anordnung des Dichtelements 16c weist das erste Bauteil 10c eine Dichtelementaufnahme 17c auf, die das Dichtelement 16c aufnimmt. Zur Ausbildung der Dichtelementaufnahme 17c weist das erste Bauteil 10c einen Vorsprung 33c auf.

Im Unterschied zu den vorherigen Ausführungsbeispielen ist das Dichtelement 16c dichtend zwischen dem ersten Bauteil 10c, dem zweiten Bauteil 14c und dem eingegossenen Element 11b angeordnet. Es kontaktiert direkt das erste Bauteil 10, direkt das zweite Bauteil 14c und direkt das eingegossene Element 11c. Das Dichtelement 16c ist zwischen dem ersten Bauteil 10c, dem zweiten Bauteil 14c und dem eingegossenen Element 11c eingeklemmt.

Zur Bereitstellung einer Dichtkraft greift das zweite Bauteil 14c in die Dichtelementaufnahme 17c ein. Das in die Dichtelementaufnahme 17c eingreifende zweite Bauteil 14c verformt das Dichtelement 16c. Im Unterschied zu den vorherigen Ausführungsbeispielen drückt das zweite Bauteil 14c das Dichtelement 16c gegen ein die Dichtelementaufnahme 17c in axialer Richtung begrenzendes Material des ersten Bauteils 10c. Das zweite Bauteil 14c drückt das Dichtelement 16c axial gegen das erste Bauteil 10c. Durch die dadurch hervorgerufene Verformung drückt das Dichtelement 16c gegen das erste Bauteil 10c, gegen das zweite Bauteil 14c und gegen das eingegossene Element 11c. Das Dichtelement 16c ist axial zwischen dem ersten Bauteil 10a und dem zweiten Bauteil 14c angeordnet.

Im weiteren Unterschied zu den vorherigen Ausführungsbeispielen fehlt dem ersten Bauteil 10c und dem zweiten Bauteil 14c eine Bewegungshemmung.

In der Figur 4 ist schematisch eine Antriebsstrangvorrichtung für ein Kraftfahrzeug in einem vierten Ausführungsbeispiel dargestellt. Die Antriebsstrangvorrichtung weist ein erstes Bauteil 10d, ein teilweise in das erste Bauteil 10d eingegossenes Element 11d und ein zweites Bauteil 14d, das stoffschlüssig mit dem eingegossenen Element 11d verbunden ist, auf. Zur Abdichtung einer Verbindungsstelle 13d zwischen dem ersten Bauteil 10d und dem eingegossenen Element 11d weist die Antriebsstrangvorrichtung eine Dichteinheit 12d mit einem Dichtelement 16d auf, die die Verbindungsstelle 13d gegenüber einem durch das erste Bauteil 10d und das zweite Bauteil 14d eingeschlossenen Innenraum 15d abdichtet. Zur Anordnung des Dichtelements 16d weist das erste Bauteil 10d eine Dichtelementaufnahme 17d auf, die das Dichtelement 16d aufnimmt. Zur Ausbildung der Dichtelementaufnahme 17d weist das erste Bauteil 10d einen Vorsprung 33d auf.

Im Unterschied zu den vorherigen Ausführungsbeispielen ist die Dichteinheit 12d dazu vorgesehen, aufgrund einer Anhaftung eine Dichtkraft zur Abdichtung der Verbindungsstelle 13d bereitzustellen. Die Dichteinheit 12d weist ein anhaftendes Dichtelement 16d auf, das die Verbindungsstelle 13d zwischen dem ersten Bauteil 10d und dem eingegossenen Element 11d flüssigkeitsdicht abdichtet. Das Dichtelement 16d haftet zur Abdichtung der Verbindungsstelle 13d an dem ersten Bauteil 10d, an dem zweiten Bauteil 14d und an dem eingegossenen Element 11d. Das Dichtelement 16d weist eine Adhäsion zu dem Material des ersten Bauteils 10d, zu dem Material des zweiten Bauteils 14d und zu dem Material des eingegossenen Elements 11 auf. Grundsätzlich kann das Dichtelement 16d lediglich an dem ersten Bauteil 10d und an dem eingegossenen Element 11d oder lediglich an dem ersten Bauteil 10d und dem zweiten Bauteil 14d anhaften. Somit kann das Dichtelement 16d grundsätzlich eine Adhäsion lediglich zu dem Material des ersten Bauteils 10d und zu dem Material des zweiten Bauteils 14d oder eine Adhäsion lediglich zu dem Material des ersten Bauteils 10d und zu dem Material des eingegossenen Elements 11d aufweisen. Das Dichtelement 16d füllt die Dichtelementaufnahme 17d zumindest teilweise aus. Das Dichtelement 16d füllt einen Spalt zwischen dem ersten Bauteil 10d, dem zweiten Bauteil 14d und dem eingegossenen Element 11d im Wesentlichen aus.

Das Dichtelement 16d stellt eine Dichtfunktion bereits nach seiner Aushärtung bereit. Es dichtet die Verbindungsstelle 13d unabhängig von dem zweiten Bauteil 14d ab. Das Dichtelement 16d ist als eine Dichtmasse ausgebildet. Das Dichtelement 16d ist aus Silikon gebildet. Grundsätzlich kann das Dichtelement 16d auch aus einer anderen Dichtmasse, welches durch ein Anhaften eine Dichtwirkung bereitstellt, gebildet sein, wie beispielsweise aus Polyurethan. Zur Abdichtung der Verbindungsstelle 13d wird das Dichtelement 16d in die Dichtelementaufnahme 17d eingespritzt, eingeschäumt, eingegossen, eingefüllt oder dergleichen. Nach dem Aushärten des Dichtelements 16d in der Dichtelementaufnahme 17d, eventuell mit Hilfe von einer Beeinflussung zumindest eines Umgebungsparameters, wie Temperatur, werden das erste Bauteil 10d und das zweite Bauteil 14d mittels dem eingegossenen Element 11d miteinander verbunden.

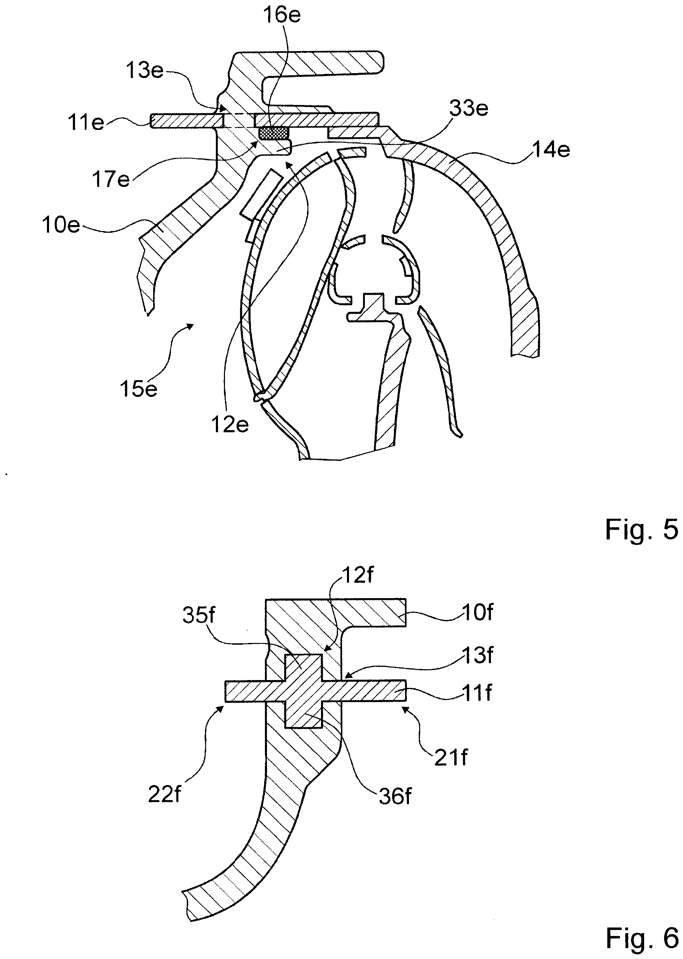

In der Figur 5 ist schematisch eine Antriebsstrangvorrichtung für ein Kraftfahrzeug in einem fünften Ausführungsbeispiel dargestellt. Die Antriebsstrangvorrichtung weist ein erstes Bauteil 10e, ein teilweise in das erste Bauteil 10e eingegossenes Element 11e und ein zweites Bauteil 14e, das stoffschlüssig mit dem eingegossenen Element 11e verbunden ist, auf. Zur Abdichtung einer Verbindungsstelle 13e zwischen dem ersten Bauteil 10e und dem eingegossenen Element 11e weist die Antriebsstrangvorrichtung eine Dichteinheit 12e mit einem Dichtelement 16e auf, die die Verbindungsstelle 13e gegenüber einem durch das erste Bauteil 10e und das zweite Bauteil 14e eingeschlossenen Innenraum 15e abdichtet. Zur Anordnung des Dichtelements 16e weist das erste Bauteil 10e eine Dichtelementaufnahme 17e auf, die das Dichtelement 16e aufnimmt. Zur Ausbildung der Dichtelementaufnahme 17e weist das erste Bauteil 10e einen Vorsprung 33e auf. Das Dichtelement 16e ist als ein anhaftendes Dichtelement ausgebildet.

Im Unterschied zu den vorherigen Ausführungsbeispielen fehlt dem zweiten Bauteil 14e ein Eingriff in die Dichtelementaufnahme 17e. Dem zweiten Bauteil 14e fehlt ein Kontakt mit dem Dichtelement 16e. Das Dichtelement 16e ist dichtend zwischen dem ersten Bauteil 10e und dem eingegossenen Element 11e angeordnet. Es kontaktiert dichtend lediglich das erste Bauteil 10e und das eingegossene Element 11e. Das Dichtelement 16e füllt im Wesentlichen die Dichtelementaufnahme 17e aus. Durch einen Verzicht auf einen Eingriff des zweite Bauteils 14e in die Dichtelementaufnahme 17e kann eine Beschädigung des Dichtelements 16e vermieden werden.

In der Figur 6 ist schematisch eine Antriebsstrangvorrichtung für ein Kraftfahrzeug in einem sechsten Ausführungsbeispiel dargestellt. Die Antriebsstrangvorrichtung weist ein erstes Bauteil 10f, ein teilweise in das erste Bauteil 10f eingegossenes Element 11f und ein nicht dargestelltes zweites Bauteil, das stoffschlüssig mit dem eingegossenen Element 11f verbunden ist, auf. Zur Abdichtung einer Verbindungsstelle 13f zwischen dem ersten Bauteil 10f und dem eingegossenen Element 11f weist die Antriebsstrangvorrichtung eine Dichteinheit 12f auf, die die Verbindungsstelle 13f gegenüber einem nicht näher dargestellten, durch das erste Bauteil 10f und das zweite Bauteil eingeschlossenen Innenraum abdichtet.

Im Unterschied zu den vorhergehenden Ausführungsbeispielen bildet das eingegossene Element 11f aufgrund seiner Form die Dichteinheit 12f teilweise aus. Zur Ausbildung der Dichteinheit 12f weist ein vollständig durch das Material des ersten Bauteils 10f umgebender Teil des eingegossenen Elements 11f eine spezielle Form auf, die durch einen Umguß mit dem ersten Bauteil 10f die Dichteinheit 12f bildet. Die Dichteinheit 12f ist durch ein Zusammenwirken des speziell geformten, in dem ersten Bauteil 10f vollständig eingegossenen Teils des eingegossenen Elements 11f mit dem das speziell geformte Teil des eingegossenen Elements 11f umgebenden Material des ersten Bauteils 10f ausgebildet.

Zur Ausbildung der Dichteinheit 12f ist der durch das Material des ersten Bauteils 10f vollständig umgebende Teil des eingegossenen Elements 11f speziell geformt. Der durch das Material des ersten Bauteils 10f umgebende Teil des eingegossenen Elements 11f ist in der Art geformt, so dass sich das erste Bauteil 10f durch eine Abkühlung nach einem Gießvorgang auf das eingegossene Element 11f aufschrumpft, wodurch die Verbindungsstelle 13f abgedichtet wird. Der durch das Material des ersten Bauteils 10f umgebende Teil des eingegossenen Elements 11f ist in der Art geformt, so dass eine Kontaktstelle zwischen dem ersten Bauteil 10f und dem eingegossenen Element 11f gewunden, gezackt, wellig oder dergleichen verläuft.

Zur Ausbildung der Dichteinheit 12f ist der durch das Material des ersten Bauteils 10f umgebende Teil des eingegossenen Elements 11f in einem Längsschnitt durch das eingegossene Element 11f, d.h. in einem Schnitt entlang einer Rotationsachse des eingegossenen Elements 11f entsprechend der Figur 6, kreuzförmig ausgebildet. Das eingegossene Element 11f weist einen ersten durch das Material des ersten Bauteils 10f vollständig umgebenden Hinterschnitt 35f und einen zweiten durch das Material des ersten Bauteils 10f vollständig umgebenden Hinterschnitt 36f auf, die die spezielle Form zur Abdichtung der Verbindungsstelle 13f bereitstellen. Durch den ersten Hinterschnitt 35f und den zweiten Hinterschnitt 36f weist das eingegossene Element 11f zwei sich in radialer Richtung erstreckende Vorsprünge auf, die vollständig durch das Material des ersten Bauteils 10f umgeben sind. Der erste Hinterschnitt 35f und der zweite Hinterschnitt 36f erstrecken sich radial jeweils über hinausragende Seiten 21f, 22f des eingegossenen Elements 11f hinaus.

Der erste Hinterschnitt 35f und der zweite Hinterschnitt 36f erstrecken sich in entgegengesetzte radiale Richtungen. Sie sind in dem Längsschnitt des eingegossenen Elements 11f rechteckig ausgebildet. Grundsätzlich kann das eingegossene Element 11f zusätzlich oder alternativ zumindest einen Hinterschnitt aufweisen, der in dem Längsschnitt des eingegossenen Elements 11f eine andere geometrische Form aufweist, wie beispielsweise eine dreieckige Form, eine halbkreisförmige Form oder dergleichen. Weiter ist es grundsätzlich denkbar, dass das eingegossene Element 11f lediglich einen Hinterschnitt zur Ausbildung der Dichteinheit 12f aufweist. Ferner ist es grundsätzlich denkbar, dass die Antriebsstrangvorrichtung zusätzlich ein Dichtelement aufweist, das dazu vorgesehen ist, aufgrund einer zumindest teilelastischen Verformung und/oder aufgrund einer Anhaftung eine Dichtkraft zur Abdichtung der Verbindungsstelle 13f bereitzustellen.

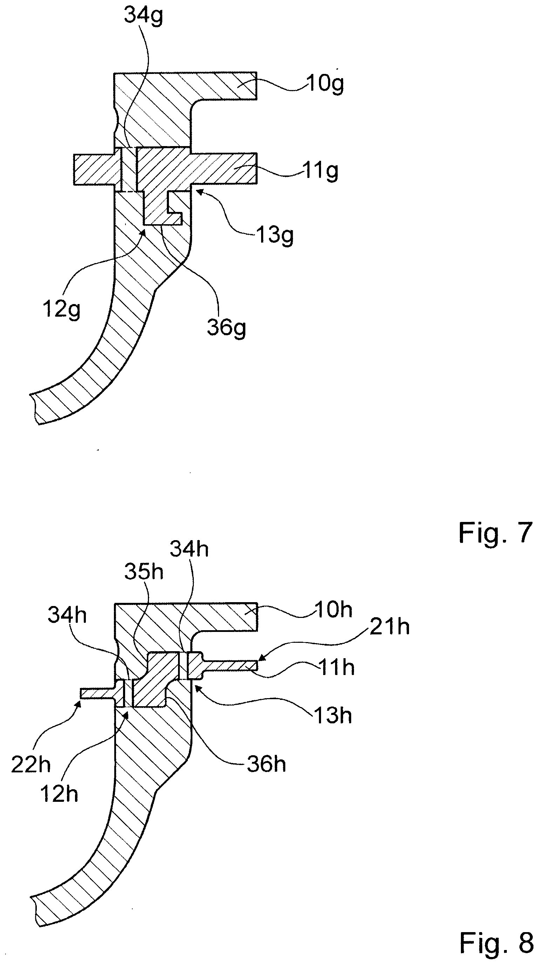

In der Figur 7 ist schematisch eine Antriebsstrangvorrichtung für ein Kraftfahrzeug in einem siebten Ausführungsbeispiel dargestellt. Die Antriebsstrangvorrichtung weist ein erstes Bauteil 10g, ein teilweise in das erste Bauteil 10g eingegossenes Element 11g und ein nicht dargestelltes zweites Bauteil, das stoffschlüssig mit dem eingegossenen Element 11g verbunden ist, auf. Zur Abdichtung einer Verbindungsstelle 13g zwischen dem ersten Bauteil 10g und dem eingegossenen Element 11g weist die Antriebsstrangvorrichtung eine Dichteinheit 12g auf, die die Verbindungsstelle 13g gegenüber einem nicht näher dargestellten, durch das erste Bauteil 10g und das zweite Bauteil eingeschlossenen Innenraum abdichtet. Um eine Gussverbindung zwischen dem ersten Bauteil 10g und dem eingegossenen Element 11g zuverlässiger zu gestalten, weist das eingegossene Element 11g mehrere Materialfehlstellen 34g auf, die in einem eingegossenen Zustand von einem Material des ersten Bauteils 10g ausgefüllt sind.

Im Unterschied zu dem vorherigen Ausführungsbeispiel weist ein durch das Material des ersten Bauteils 10f umgebender Teil des eingegossenen Elements 11f zur Ausbildung der Dichteinheit 12g einen Hinterschnitt 36g auf, der in einem Längsschnitt durch das eingegossene Element 11g L-förmig ausgebildet ist. Der Hinterschnitt 36g weist eine sich axial erstreckende Nase auf. Grundsätzlich kann der Hinterschnitt 36g auch T-förmig oder dergleichen ausgebildet sein.

In der Figur 8 ist schematisch eine Antriebsstrangvorrichtung für ein Kraftfahrzeug in einem achten Ausführungsbeispiel dargestellt. Die Antriebsstrangvorrichtung weist ein erstes Bauteil 10h, ein teilweise in das erste Bauteil 10h eingegossenes Element 11h und ein nicht dargestelltes zweites Bauteil, das stoffschlüssig mit dem eingegossenen Element 11h verbunden ist, auf. Zur Abdichtung einer Verbindungsstelle 13h zwischen dem ersten Bauteil 10h und dem eingegossenen Element 11h weist die Antriebsstrangvorrichtung eine Dichteinheit 12h auf, die die Verbindungsstelle 13h gegenüber einem nicht näher dargestellten, durch das erste Bauteil 10h und das zweite Bauteil eingeschlossenen Innenraum abdichtet. Um eine Gussverbindung zwischen dem ersten Bauteil 10h und dem eingegossenen Element 11h zuverlässiger zu gestalten, weist das eingegossene Element 11h mehrere Materialfehlstellen 34h auf, die in einem eingegossenen Zustand von einem Material des ersten Bauteils 10h ausgefüllt sind.

Im Unterschied zu dem vorherigen Ausführungsbeispiel weist das eingegossene Element 11h einen ersten Hinterschnitt 35h und einen zweiten Hinterschnitt 36h auf, die ein durch das Material des ersten Bauteils 10f umgebenden Teil des eingegossenen Elements 11f in einem Längsschnitt betrachtet S-förmig ausbilden. Der durch das Material des ersten Bauteils 10f umgebende Teil des eingegossenen Elements 11f ist zur Ausbildung der Dichteinheit 12h in der Art geformt, so dass eine erste axial herausragende Seite 21h des eingegossenen Elements 11h und eine zweite axial herausragende Seite 22h des eingegossenen Elements 11h im Vergleich zueinander auf verschiedenen radialen Ebenen angeordnet sind.

### Bezugszeichenliste

- 10: Bauteil
- 11: eingegossenes Element
- 12: Dichteinheit
- 13: Verbindungsstelle
- 14: Bauteil
- 15: Innenraum
- 16: Dichtelement
- 17: Dichtelementaufnahme
- 18: Bewegungshemmung
- 19: Bewegungshemmung
- 20: Drehmomentwandler
- 21: Seite
- 22: Seite
- 23: Wuchtelement
- 24: Bauteil
- 25: Bauteil
- 26: Bauteil
- 27: Bauteil
- 28: Schöpfvorrichtung
- 29: Materialfehlstelle
- 30: Materialfehlstelle
- 31: Schöpfring
- 32: Materialeinschnürung
- 33: Vorsprung
- 34: Materialfehlstelle
- 35: Hinterschnitt
- 36: Hinterschnitt

## Patentansprüche

1. Antriebsstrangvorrichtung für ein Kraftfahrzeug, mit zumindest einem zur
Übertragung eines Drehmoments vorgesehenen ersten Bauteil (10a; 10b; 10c; 10d; 10e;
10f; 10g; 10h) und zumindest einem teilweise in das erste Bauteil (10a; 10b; 10c; 10d; 10e;
10f; 10g; 10h) eingegossenen Element (11a; 11b; 11c; 11d; 11e; 11f; 11g; 11h), das zur Übertragung des Drehmoments vorgesehen ist, wobei das erste Bauteil (10a; 10b; 10c;
10d; 10e; 10f; 10g; 10h) und das eingegossene Element (11a; 11b; 11c; 11d; 11e; 11f; 11g; 11h) aus unterschiedlichen Materialen bestehen,
wobei das erste Bauteil (10a; 10b; 10c; 10d; 10e; 10f; 10g; 10h) mit zumindest einem
weiteren zur Übertragung eines Drehmoments vorgesehenen zweiten Bauteil (14a; 14b; 14c;
14d; 14e; 14f) über das eingegossene Element (11a; 11b; 11c; 11d; 11e; 11f; 11g; 11h) drehmomentübertragend mittelbar verbunden ist, derart, dass das Drehmoment ausschließlich über das eingegossene Element (11a; 11b; 11c; 11d; 11e; 11f; 11g; 11h) zwischen den Bauteilen (10a; 10b; 10c; 10d; 10e; 10f; 10g; 10h; 14a; 14b; 14c; 14d; 14e; 14f) übertragen werden kann,
**gekennzeichnet durch**
eine Dichteinheit (12a; 12b; 12c; 12d; 12e; 12f; 12g; 12h), die dazu vorgesehen ist,
eine Verbindungsstelle (13a; 13b; 13c; 13d; 13e; 13f; 13g; 13h) zwischen dem ersten Bauteil (10a; 10b; 10c; 10d; 10e; 10f; 10g; 10h) und dem eingegossenen Element (11a; 11b; 11c; 11d; 11e; 11f; 11g; 11h) abzudichten.

2. Antriebsstrangvorrichtung nach Anspruch 1,
**dadurch gekennzeichnet, dass**
das weitere zur Übertragung des Drehmoments vorgesehenes zweiten Bauteil (14a; 14b;
14c; 14d; 14e; 14f) gemeinsam mit dem anderen ersten Bauteil (10a; 10b; 10c; 10d; 10e;
10f; 10g; 10h) zumindest teilweise einen Innenraum (15a; 15b; 15c; 15d; 15e) einschließt, wobei die Dichteinheit (12a; 12b; 12c; 12d; 12e; 12f; 12g; 12h) dazu vorgesehen ist, die Verbindungsstelle (13a; 13b; 13c; 13d; 13e; 13f; 13g; 13h) und den Innenraum (15a; 15b; 15c; 15d; 15e; 15f) gegeneinander abzudichten.

3. Antriebsstrangvorrichtung nach Anspruch 1 oder 2,
**dadurch gekennzeichnet, dass**
die Dichteinheit (12a; 12b; 12c; 12d; 12e) dazu vorgesehen ist, aufgrund einer zumindest teilelastischen Verformung und/oder aufgrund einer Anhaftung eine Dichtkraft zur Abdichtung der Verbindungsstelle (13a; 13b; 13c; 13d; 13e) bereitzustellen.

4. Antriebsstrangvorrichtung nach einem der vorhergehenden Ansprüche,
**dadurch gekennzeichnet, dass**
die Dichteinheit (12a; 12b; 12c; 12d) zumindest ein Dichtelement (16a; 16b; 16c; 16d) aufweist, das dichtend zwischen den zwei Bauteilen (10a, 14a; 10b, 14b; 10c, 14c; 10d, 14d) angeordnet ist.

5. Antriebsstrangvorrichtung nach einem der vorhergehenden Ansprüche,
**dadurch gekennzeichnet, dass**
die Dichteinheit (12c; 12d; 12e) zumindest ein Dichtelement (16c; 16d; 16e) aufweist, das dichtend zwischen zumindest einem der Bauteile (10c, 14c; 10d, 14d; 10e) und dem eingegossenen Element (11c; 11d; 11e) angeordnet ist.

6. Antriebsstrangvorrichtung nach Anspruch 4 oder 5,
**dadurch gekennzeichnet, dass**
zumindest eines der Bauteile (10a; 10b; 10c; 10d; 10e) wenigstens eine Dichtelementaufnahme (17a; 17b; 17c; 17d; 17e) aufweist, die das zumindest eine Dichtelement (16a; 16b; 16c; 16d; 16e) wenigstens teilweise aufnimmt.

7. Antriebsstrangvorrichtung nach Anspruch 6,
**dadurch gekennzeichnet, dass**
zumindest eines der Bauteile (14a; 14b; 14c; 14d) zumindest teilweise in die Dichtelementaufnahme (17a; 17b; 17c; 17d) eingreift.

8. Antriebsstrangvorrichtung nach Anspruch 6 oder 7,
**dadurch gekennzeichnet, dass**
zumindest eines der Bauteile (10a; 10b) wenigstens eine Bewegungshemmung (18a; 18b, 19b) für das Dichtelement (16a; 16b) aufweist, die dazu vorgesehen ist, eine Bewegung des Dichtelements (16a; 16b) in der Dichtelementaufnahme (17a; 17b) zumindest zu erschweren.

9. Antriebsstrangvorrichtung nach Anspruch 6,
**dadurch gekennzeichnet, dass**
die Dichtelementaufnahme (17a; 17b; 17c; 17d; 17e) als eine Materialfehlstelle ausgebildet ist, die in Richtung des weiteren zweiten Bauteils (14a; 14b; 14c; 14d; 14e) geöffnet ist,
wobei sie ringförmig und in Form einer Rinne ausgebildet ist, die in axialer Richtung geöffnet ist,
wobei die Dichtelementaufnahme (17a; 17b; 17c; 17d; 17e) bezüglich einer Rotationsachse der Bauteile (10a; 10b; 10c; 10d; 10e; 14a; 14b; 14c; 14d; 14e) radial innerhalb des eingegossenen Elements (11a; 11b; 11c; 11d; 11e) angeordnet ist,
wobei die Dichtelementaufnahme (17a; 17b; 17c; 17d; 17e) in eine dem weiteren zweiten Bauteil (14a; 14b; 14c; 14d; 14e) abgewandten Richtung axial und in eine der Rotationsachse zugewandten Richtung radial durch das erste Bauteil (10a; 10b; 10c; 10d; 10e) begrenzt ist,
wobei in eine der Rotationsachse abgewandten Richtung die Dichtelementaufnahme (17a; 17b; 17c; 17d; 17e) radial durch das eingegossene Element (11a; 11b; 11c; 11d; 11e) begrenzt ist,
wobei das erste Bauteil (10a; 10b; 10c; 10d; 10e) zur Ausbildung der Dichtelementaufnahme (17a; 17b; 17c; 17d; 17e) einen Vorsprung (33a, 33b, 33c, 33d, 33e) aufweist, welcher radial unterhalb des eingegossenen Elements (11a; 11b; 11c; 11d; 11e) angeordnet ist und welcher sich ausgehend von einer dem weiteren zweiten Bauteil (14a; 14b; 14c; 14d; 14e) zugewandten Oberfläche des ersten Bauteils (10a; 10b; 10c; 10d; 10e) axial in Richtung des weiteren zweiten Bauteils (14a; 14b; 14c; 14d; 14e) erstreckt, wobei sich das Dichtelement (16a, 16b, 16c, 16d, 16e) an dem Vorsprung (33a, 33b, 33c, 33d, 33e) abstützt und auf dem Vorsprung (33a, 33b, 33c, 33d, 33e) angeordnet ist, wobei die Dichtelementaufnahme (17a; 17b; 17c; 17d; 17e) durch das Gießen des ersten Bauteils (10a; 10b; 10c; 10d; 10e) gebildet ist.

## Claims

1. Drive train device for a motor vehicle, comprising at least one first component (10a; 10b; 10c; 10d; 10e; 10f; 10g; 10h) provided for transmitting a torque and at least one element (11a; 11b; 11c; 11d; 11e; 11f; 11g; 11h) cast at least partially into the first component (10a; 10b; 10c; 10d; 10e; 10f; 10g; 10h) and provided for transmitting the torque, wherein the first component (10a; 10b; 10c; 10d; 10e; 10f; 10g; 10h) and the cast-in element (11a; 11b; 11c; 11d; 11e; 11f; 11g; 11h) consist of different materials,
wherein the first component (10a; 10b; 10c; 10d; 10e; 10f; 10g; 10h) is indirectly connected via the cast-in element (11a; 11b; 11c; 11d; 11e; 11f; 11g; 11h) in a torque-transmitting manner to at least one further second component (14a; 14b; 14c; 14d; 14e; 14f) provided for transmitting a torque in such a way that the torque can exclusively be transmitted between the components (10a; 10b; 10c; 10d; 10e; 10f; 10g; 10h; 14a; 14b; 14c; 14d; 14e; 14f) via the cast-in element (11a; 11b; 11c; 11d; 11e; 11f; 11g; 11h),
**characterised by**
a seal unit (12a; 12b; 12c; 12d; 12e; 12f; 12g; 12h) provided for sealing a connecting point (13a; 13b; 13c; 13d; 13e; 13f; 13g; 13h) between the first component (10a; 10b; 10c; 10d; 10e; 10f; 10g; 10h) and the cast-in element (11a; 11b; 11c; 11d; 11e; 11f; 11g; 11h).

2. Drive train device according to claim 1,
**characterised in that**
the further second component (14a; 14b; 14c; 14d; 14e; 14f) provided for transmitting the torque encloses together with the first component (10a; 10b; 10c; 10d; 10e; 10f; 10g; 10h) at least partially an interior (15a; 15b; 15c; 15d; 15e), wherein the seal unit (12a; 12b; 12c; 12d; 12e; 12f; 12g; 12h) is provided for sealing the connecting point (13a; 13b; 13c; 13d; 13e; 13f; 13g; 13h) and the interior (15a; 15b; 15c; 15d; 15e) against one another.

3. Drive train device according to claim 1 or 2,
**characterised in that**
the seal unit (12a; 12b; 12c; 12d; 12e) is provided to make available a sealing force for sealing the connecting point (13a; 13b; 13c; 13d; 13e) by virtue of an at least partially elastic deformation and/or by virtue of adhesion.

4. Drive train device according to any of the preceding claims,
**characterised in that**
the seal unit (12a; 12b; 12c; 12d) has at least one sealing element (16a; 16b; 16c; 16d) arranged in a sealing manner between the two components (10a, 14a; 10b, 14b; 10c, 14c; 10d, 14d).

5. Drive train device according to any of the preceding claims,
**characterised in that**
the seal unit (12c; 12d; 12e) has at least one sealing element (16c; 16d; 16e) arranged in a sealing manner between at least one of the components (10c. 14c; 10d, 14d; 10e) and the cast-in element (11c; 11d; 11 e).

6. Drive train device according to claim 4 or 5,
**characterised in that**
at least one of the components (10a; 10b; 10c; 10d; 10e) has at least one sealing element receptacle (17a; 17b; 17c; 17d; 17e), which at least partially accommodates the at least one sealing element (16a; 16b; 16c; 16d; 16e).

7. Drive train device according to claim 6,
**characterised in that**
at least one of the components (14a; 14b; 14c; 14d) engages at least partially with the sealing element receptacle (17a; 17b; 17c; 17d).

8. Drive train device according to claim 6 or 7,
**characterised in that**
at least one of the components (10a; 10b) has at least one retarding mechanism (18a; 18b, 10b) provided to at least impede a movement of the sealing element (16a; 16b) in the sealing element receptacle (17a; 17b)

9. Drive train according to claim 6,
**characterised in that**
the sealing element receptacle (17a; 17b; 17c; 17d; 17e) is designed as a material vacancy open towards the further second component (14a; 14b; 14c; 14d; 14e),
wherein it is designed to be annular and in the form of a groove open in the axial direction,
wherein the sealing element receptacle (17a; 17b; 17c; 17d; 17e) is located radially within the cast-in element (11a; 11b; 11c; 11d; 11e) in respect of an axis of rotation of the components (10a; 10b; 10c; 10d; 10e; 14a; 14b; 14c; 14d; 14e),
wherein the sealing element receptacle (17a; 17b; 17c; 17d; 17e) is bounded by the first component (10a; 10b; 10c; 10d; 10e) axially in a direction away from the further component (14a; 14b; 14c; 14d; 14e) and radially in a direction towards the axis of rotation,
wherein the sealing element receptacle (17a; 17b; 17c; 17d; 17e) is bounded radially by the cast-in element (11a; 11b; 11c; 11d; 11e) in a direction away from the axis of rotation,
wherein the first component (10a; 10b; 10c; 10d; 10e) has, for forming the sealing element receptacle (17a; 17b; 17c; 17d; 17e), a projection (33a, 33b, 33c, 33d, 33e), which is located radially below the cast-in element (11a; 11b; 11c; 11d; 11e) and which extends, starting from a surface of the first component (10a; 10b; 10c; 10d; 10e) which faces the further component (14a; 14b; 14c; 14d; 14e), axially towards the further second component (14a; 14b; 14c; 14d; 14e),
wherein the sealing element (16a; 16b; 16c; 16d; 16e) is supported on the projection (33a, 33b, 33c, 33d, 33e) and located on the projection (33a, 33b, 33c, 33d, 33e),
wherein the sealing element receptacle (17a; 17b; 17c; 17d; 17e) is formed by the casting of the first component (10a; 10b; 10c; 10d; 10e).

## Revendications

1. Chaîne cinématique pour un véhicule automobile, comprenant au moins un premier élément structural (10a, 10b, 10c, 10d, 10e, 10f, 10g 10h) destiné à transmettre un couple de rotation et au moins un élément moulé (11a, 11b, 11c, 11d, 11e, 11f, 11g, 11h) partiellement dans le premier élément structural (10a, 10b, 10c, 10d, 10e, 10f, 10g 10h), qui sert à transmettre le couple de rotation, le premier élément structural (10a, 10b, 10c, 10d, 10e, 10f, 10g 10h) et l'élément moulé (11a, 11B, 11c, 11d, 11e, 11f, 11g, 11h) étant constitués de matériaux différents, le premier élément structural (10a, 10b, 10c, 10d, 10e, 10f, 10g 10h) étant relié directement au moins à un autre second élément structural (14a, 14b, 14c, 14d, 14e, 14f) servant à transmettre un couple de rotation par l'intermédiaire de l'élément moulé (11a, 11b, 11c, 11d, 11e, 11f, 11g, 11h) de manière à ce que le couple de rotation puisse être transmis exclusivement par l'intermédiaire de l'élément moulé (11a, 11b, 11c, 11d, 11e, 11f, 11g, 11h) entre les éléments structuraux (10a, 10b, 10c, 10d, 10e, 10f, 10g 10h, 14a, 14b, 14c, 14d, 14e, 14f),
**caractérisée par** une unité d'étanchéité (12a, 12b 12c, 12d, 12e, 12f, 12g, 12h) qui sert à rendre étanche un point de liaison (13a, 13b, 13c, 13d, 13e, 13f, 13g, 13h) entre le premier élément structural (10a, 10b, 10c, 10d, 10e, 10f, 10g 10h) et l'élément moulé (11a, 11b, 11c, 11d, 11e, 11f, 11g, 11h).

2. Chaîne cinématique selon la revendication 1, **caractérisée en ce que** l'autre second élément structural (14a, 14b, 14c, 14d, 14e, 14f) conjointement avec l'autre premier élément structural (10a, 10b, 10c, 10d, 10e, 10f, 10g 10h) renferme au moins à certains endroits un espace intérieur (15a, 15B, 15c, 15d, 15e), l'unité d'étanchéité (12a, 12b 12c, 12d, 12e, 12f, 12g, 12h) servant à isoler hermétiquement le point de liaison (13a, 13b, 13c, 13d, 13e, 13f, 13g, 13h) et l'espace intérieur (15a, 15B, 15c, 15d, 15e, 15f) l'un de l'autre.

3. Chaîne cinématique selon la revendication 1 ou 2, **caractérisée en ce que** l'unité d'étanchéité (12a, 12b, 12c, 12d, 12e) permet d'obtenir, en raison d'une déformation au moins partiellement élastique et/ou en raison d'une adhérence, une force d'étanchéité servant à rendre étanche le point de liaison (13a, 13b, 13c, 13d, 13e).

4. Chaîne cinématique selon l'une quelconque des revendications précédentes, **caractérisée en ce que** l'unité d'étanchéité (12a, 12b 12c, 12d) présente au moins un élément d'étanchéité (16a, 16b, 16c, 16d) qui est disposé de manière étanche entre les deux éléments structuraux (10a, 14a, 14b, 10c, 14c, 10d, 14d).

5. Chaîne cinématique selon l'une quelconque des revendications précédentes, **caractérisée en ce que** l'unité d'étanchéité (12c, 12d, 12e) présente au moins un élément d'étanchéité (16c, 16d, 16e) qui est disposé de manière étanche entre au moins l'un des éléments structuraux (10c, 14c, 10d, 14d, 10e) et l'élément moulé (11c, 11d, 11e).

6. Chaîne cinématique selon la revendication 4 ou 5, **caractérisée en ce qu'**au moins l'un des éléments structuraux (10a, 10b, 10c, 10d, 10e) présente au moins un logement d'élément d'étanchéité (17a, 17b, 17c, 17d, 17e) qui loge au moins à certains endroits l'au moins un élément d'étanchéité (16a, 16b, 16c, 16d, 16e).

7. Chaîne cinématique selon la revendication 6, **caractérisée en ce qu'**au moins l'un des éléments structuraux (14a, 14b, 14c, 14d) s'engrène au moins partiellement dans le logement d'élément d'étanchéité (17a, 17b, 17c, 17d).

8. Chaîne cinématique selon la revendication 6 ou 7, **caractérisé en ce qu'**au moins l'un des éléments structuraux (10a, 10b) présente au moins un blocage de mouvement (18a, 18b, 19b) pour l'élément d'étanchéité (16a, 16b) qui sert à au moins entraver un mouvement de l'élément d'étanchéité (16a, 16b) dans le logement d'élément d'étanchéité (17a, 17b).

9. Chaîne cinématique selon la revendication 6 **caractérisé en ce que** le logement d'élément d'étanchéité (17a, 17b, 17c, 17d, 17e) est conçu sous la forme d'un point exempt de matériau qui est ouvert dans la direction de l'autre second élément structural (14a, 14b, 14c, 14d, 14e), qui est annulaire et en forme de rainure qui est ouverte dans la direction axiale, le logement d'élément d'étanchéité (17a, 17b, 17c, 17d, 17e) étant disposé par rapport à un axe de rotation de l'élément structural (10a, 10b, 10c, 10d, 10e, 14a, 14b, 14c, 14d, 14e) radialement dans l'élément moulé (11a, 11b, 11c, 11d, 11e), le logement d'élément d'étanchéité (17a, 17b, 17c, 17d, 17e) étant limité dans une direction opposée à l'autre second élément structural (14a, 14b, 14c, 14d, 14e) et dans une direction orientée vers l'axe de rotation radialement par le premier élément structural (10a, 10b, 10c, 10d, 10e), dans une direction opposée à l'axe de rotation le logement d'élément d'étanchéité (17a, 17b, 17c, 17d, 17e) étant limité radialement par l'élément moulé (11a, 11b, 11c, 11d, 11e), le premier élément structural (10a, 10b, 10c, 10d, 10e) présentant une saillie (33a, 33b, 33c, 33d, 33e) pour former le logement d'élément d'étanchéité (17a, 17b, 17c, 17d, 17e), qui est disposée radialement sous l'élément moulé (11a, 11b, 11c, 11d, 11e) et qui s'étend à partir d'une surface orientée vers l'autre second élément structural (14a, 14b, 14c, 14d, 14e) du premier élément structural (10a, 10b, 10c, 10d, 10e) axialement dans la direction de l'autre second élément structural (14a, 14b, 14c, 14d, 14e), l'élément d'étanchéité (16a, 16b, 16c, 16d, 16e) s'appuyant sur la saillie (33a, 33B, 33c, 33d, 33e) et est disposé sur la saillie (33a, 33b, 33c, 33d, 33e), le logement d'élément d'étanchéité (17a, 17b, 17c, 17d, 17e) étant formé par la coulée du premier élément structural (10a, 10b, 10c, 10d, 10e).
